# EUROPEAN PATENT SPECIFICATION

(11) **EP 4 112 452 B1**
(45) Date of publication and mention of the grant of the patent: **04.12.2024**
(21) Application number: 21182478.4
(22) Date of filing: 29.06.2021
(51) Int. Cl.: B64C 13/50, B64D 45/00, B64F 5/60, B64C 13/40

(54) **METHOD AND APPARATUS FOR CONDUCTING HEALTH MONITORING**
VERFAHREN UND VORRICHTUNG ZUR DURCHFÜHRUNG VON GESUNDHEITSÜBERWACHUNG
PROCÉDÉ ET APPAREIL POUR EFFECTUER UNE SURVEILLANCE DE SANTÉ

(43) Date of publication of application: 04.01.2023
(73) Proprietor: Airbus Operations GmbH, 21129 Hamburg (DE); Liebherr-Aerospace Lindenberg GmbH, 88161 Lindenberg (DE)
(72) Inventor: Fleddermann, Andreas, 21129 Hamburg (DE); van Bruggen, Jan Arend, 21129 Hamburg (DE); Kohlöffel, Christian, 88161 Lindenberg (DE); Hartmann, Tobias, 88161 Lindenberg (DE); van Balen, Elko, 88161 Lindenberg (DE)
(74) Representative: KASTEL Patentanwälte PartG mbB

(56) References cited:
- EP-A1- 3 037 346
- EP-A1- 3 037 347
- EP-A1- 3 398 851

## Description

The invention relates to a health monitoring method as in claim 1 Further, the invention relates to a flight control surface driving apparatus as in claim 5 and to a computer program as in claim 15.

A conventional fixed-wing aircraft flight control system consists of flight control surfaces, the respective cockpit controls, connecting linkages, and the operating mechanisms to control an aircraft's direction or behaviour in flight.

Aircraft flight control surfaces are aerodynamic devices allowing a pilot to adjust and control the aircraft's flight attitude. For example, a high lift system of an aircraft includes flight control surfaces such as slats, flaps, and/or variable-sweep wings. Conventionally, control surface drive apparatuses for driving movement of such control surfaces comprise a control surface drive device which generates the mechanical power for the movement, a transmission device for transmitting this mechanical power to the control surfaces, and a control device comprising a power control unit.

For example, typical high lift systems of commercial and military aircraft are powered by a centralized PCU mounted in the fuselage with computerized control.

Commonly, the PCU is connected to transmission device including a torque shaft system which provides the mechanical power to geared actuators at the flap or slat panel drive stations. Additionally, a braking device, especially comprising a wing tip brake (WTP) in each wing, may be an integrated part of the transmission device.

The WTB is capable to arrest and hold the system in failure cases. First and second independent slat flap computers (SFCC) control and monitor the system. Common PCUs have first and second independent motors which are connected by a speed summing differential gear (DIFG). Each motor is provided with a power-off brake (POB) to arrest the motor in the commanded position. Depending on the aircraft power supply system and the availability requirements, the PCU can be purely hydraulically or electrically driven or includes each of an electric motor and a hydraulic motor (hybrid PCU). For the electric drive digitally controlled brushless DC motors are commonly used.

Motor control is usually established by a closed loop layout to maintain speed and torque command inputs. The control algorithms can be implemented in a controller (e.g. SFCC) which is provided with all required data to control the motors.

The electric motor is supplied by the aircraft electrical busbar. A motor control electronic (MCE) is interfacing with the SFCC and the aircraft electrical busbar.

The MCE converts the electric power as required for the brushless DC motor and provides motor control. It is also possible that the control algorithm is implemented in the MCE. In this case the SFCC provides corresponding drive states (e.g. via a data bus system).

In the default high-lift operating mode the WTBs are released and the PCU is providing the power to operate the high-lift system (HLS) with the commanded speed into any gated position.

As a result, the PCU is usually only operating for a very small time frame (starting and landing) of a flight.

Other common driving apparatuses for driving movement of at least one control surface may have first and second central linear actuators outputting a linear movement to the transmission device. The transmission device transmits this movement by a linearly movable element, e.g., of a push rod, a cable or the like to mechanical actuators of the control surface.

EP 3 037 346 A1 discloses a method for testing a component in a high lift system of an aircraft. A brake coupled with a hydraulic motor is activated, and a rotation of the motor is commanded for a period of time, wherein the brake remains activated. A motion sensor determines a motion. The determined motion is compared to a predetermined threshold value. In case the determined motion exceeds the predetermined motion threshold value, a brake indication signal is indicated.

EP 3 398 851 A1 discloses a method to measure an aircraft high lift system brake response time. For testing the brake, a motion of a motor operably coupled with the brake is determined by a sensor. The brake is activated, and an elapsed time until the brake has arrested the motion is measured. A brake failure signal is indicated, if the elapsed time exceeds the threshold.

The invention aims to improve the driving of movement of aircraft flight control surfaces, especially of a high-lift device, in terms of long-time reliability, early detecting of wear and reduction of maintenance work.

The invention provides a health monitoring method, a flight control surface driving apparatus, a flight control system, an aircraft and a computer program in accordance with the independent claims.

Advantageous embodiments are subject-matter of the dependent claims.

The invention provides according to one aspect thereof a health monitoring method for checking a functionality of a flight control surface driving apparatus comprising a control surface drive device for generating mechanical power for moving at least one control surface, a transmission device for transmitting mechanical power from the control surface drive device to the at least one control surface, at least one brake device for braking movement of the transmission device, at least one load sensor for sensing a load imposed on the control surface drive device, and a control device configured to receive a load sensor output signal from the at least one load sensor and to control the control surface drive device in response to the load sensor output signal, wherein the health monitoring method comprises automatically checking proper functionality of at least one of the at least one load sensor and the transmission device by
a) blocking movement of the transmission device by means of the brake device,
b) commanding the control surface drive device to apply a load on the transmission device blocked by the brake device, while
c) determining whether at least one load sensor output signal of the at least one load sensor remains within a predetermined range.

The health monitoring method can be conducted any time when the control surface is not active.

Preferably, the health monitoring method is part of a performance test routine for other devices of the control surface driving apparatus, for example of a performance test for the brake device and/or of a performance test for an internal brake device within the control surface drive device such as a Power Off Brake (POB).

Preferably, step b) comprises:
b1) sending a load command signal to the control surface drive device corresponding a commanded load to be applied.

Preferably, step b) comprises:
b2) commanding the control surface drive device to apply a rising load on the blocked transmission device.

Preferably, step b) comprises:
b3) commanding a closed-loop controller, configured to control a speed and load of the control surface drive device by a close-loop control, to drive the control surface drive device with a predetermined speed and automatically generating load command signals commanding rising loads by the close-loop controller.

Preferably, step c) comprises:
c1) determining whether a difference between the commanded load and a load corresponding to the at least one load sensor output signal exceeds a predetermined maximum value.

Preferably, step c) comprises:
c2) setting the predetermined range depending on a load command signal.

Preferably, step c) comprises:
c3) ending the determination when the load command signal achieves a predetermined load limit.

Preferably, step c) comprises:
c4) ending the determination when the at least one load sensor output signal achieves a predetermined load limit of a load limiting function of the flight control surface driving apparatus.

Preferably, step c) comprises:
c5) determining whether a commanded load signal generated in step b) is within a predetermined range.

Preferably, the at least one load sensor for sensing a load imposed on the control surface drive device includes a first load sensor for sensing the load imposed on the control surface drive device and a second load sensor for sensing the load imposed on the control surface drive device. Preferably, the health monitoring method checks the functionality of the first load sensor and the functionality of the second load sensor at the same time by conducting step c) on their output signals. Preferably, the flight control surface driving apparatus to be monitored comprises at least one rotating element for transmitting mechanical power to the at least one control surface, wherein the at least one load sensor is at least one torque sensor for determining a torque on the rotating element. Especially, the rotating element is an output shaft of the control surface drive device. Preferably, the flight control surface driving apparatus comprises a first torque sensor unit (TSU) and a redundant second torque sensor unit (TSU) on each rotating output element of the control surface drive to sense the torque thereon.

Preferably, a failure message signal is issued when step c) leads to the result that the output of the at least on load sensor lies outside an expected range defined by at least one threshold. Preferably, the threshold is set depending on a load command signal. Most advantageous, a load command signal of a closed-loop motor controller is used.

According to another aspect, the invention provides a flight control surface driving apparatus comprising:
a control surface drive device for generating mechanical power for moving at least one control surface,
a transmission device for transmitting mechanical power from the control surface drive device to the at least one control surface,
at least one brake device for braking movement of the transmission device,
at least one load sensor for sensing a load imposed on the control surface drive device, and
a control device configured to receive a load sensor output signal from the at least one load sensor and to control the control surface drive device in response to the load sensor output signal, the control device being configured to automatically check proper functionality of the load sensor and/or the transmission device by :
   a) blocking movement of the transmission device by means of the brake device,
   b) commanding the control surface drive device to apply a load on the transmission device blocked by the brake device, while
   c) determining whether at least one load sensor output signal of the at least one load sensor remains within a predetermined range.

Preferably, the control device is configured to automatically conduct the health monitoring method according to any of the above-mentioned embodiments.

Preferably, the control surface drive device comprises at least one rotating output shaft, and the at least one load sensor comprises at least one torque sensor for sensing a torque on the rotating output shaft.

Preferably, there is at least a first and a second load sensor for sensing torque on an output member of the control surface drive device or on an input member of the transmission device.

Preferably, there is at least a first and a second torque sensor for sensing torque on an input end of an input rotating shaft of the transmission device. Preferably, the first and second torque sensors determine the torque on an output of the control surface drive device connected to the input end.

Preferably, the control surface drive device includes an electric motor controlled by a close-loop controller with regard to speed and torque, wherein the close-loop controller is configured to send a torque command signal commanding gradually rising torque when an output of the electric motor is blocked, wherein the control device is configured to compare the output of the at least one load sensor with the torque command signal.

Preferably, the brake device comprises left-hand and right-hand wing tip brakes acting on an output element of the transmission device arranged near a wing tip.

According to another aspect, the invention provides a flight control system for an aircraft, comprising at least one flight control surface and at least one flight control surface driving apparatus according to any of the above-mentioned embodiments for driving the movement of the at least one flight control surface.

Preferably, the flight control system further comprises left-hand and right-hand series of slats and flaps of a high lift system as the at least one control surface.

Preferably, the at least one load sensor for sensing a load imposed on the control surface drive device includes a first load sensor for sensing the load imposed on the control surface drive device and a second load sensor for sensing the load imposed on the control surface drive device.

Preferably, the flight control system further comprises the second load sensor and a second controller receiving a load sensor output signal of the second load sensor and controlling the movement of the at least one control surface in response to the load sensor output signal of the second load sensor.

According to the invention, the flight control system comprises at least one brake device for braking or blocking movement of the transmission device. Preferably, the brake device has at least one brake element imposing a braking force to an output element of the transmission device. Especially, the braking device is a wing tip brake to be disposed near to a wing tip of the aircraft to be equipped with a slat and/or flap drive system including the flight control surface drive apparatus for driving movements of slats and/or flaps.

Preferably, the control device is configured to compare the load sensor output signal of the at least one load sensor with a predetermined maximum load value in a flight and ground condition and to trigger, when the load sensor output exceeds the predetermined maximum load value, a reverse movement and a subsequent load control sequence for controlling the load to achieve a lower load level. According to another aspect, the invention provides an aircraft comprising the flight control surface driving apparatus according to any one of the above-mentioned embodiments and/or the flight control system according to any one of the above-mentioned embodiments. Especially, the aircraft has a high-lift system with slats and flaps which are driven by the flight control surface drive apparatus. According to another aspect, the invention provides a computer program comprising instructions to cause the flight control system of any of the above-mentioned embodiments to execute the steps of the health monitoring method according to any of the above-mentioned embodiments.

Preferred embodiments of the invention propose an automatically performed torque sensor unit health monitoring. Preferred embodiments of the invention provide an automatically performed torque sensor monitoring which can be conducted during operation of an aircraft.

According to preferred embodiments, economy of operation is improved using an automated detection system. While embodiments of the invention are particularly suitable when used in connection with flight control surface driving apparatuses suitable for driving primary flight control surfaces such as ailerons, rudders, etc. or secondary flight control surfaces such as high-lift devices, examples disclosed herein are also applicable, albeit outside the scope of the appended claims, to other movable actuated surfaces in an aircraft such as cargo doors, landing gear doors, etc.

Preferred embodiments of the invention are explained below with reference to the drawings in which:
- Fig. 1: depicts an embodiment of an aircraft;
- Fig. 2: depicts an embodiment of a part of a flight control system of the aircraft;
- Fig. 3: shows a graph with a load command signal and an output signal of load sensor of the flight control system during a health monitoring procedure.

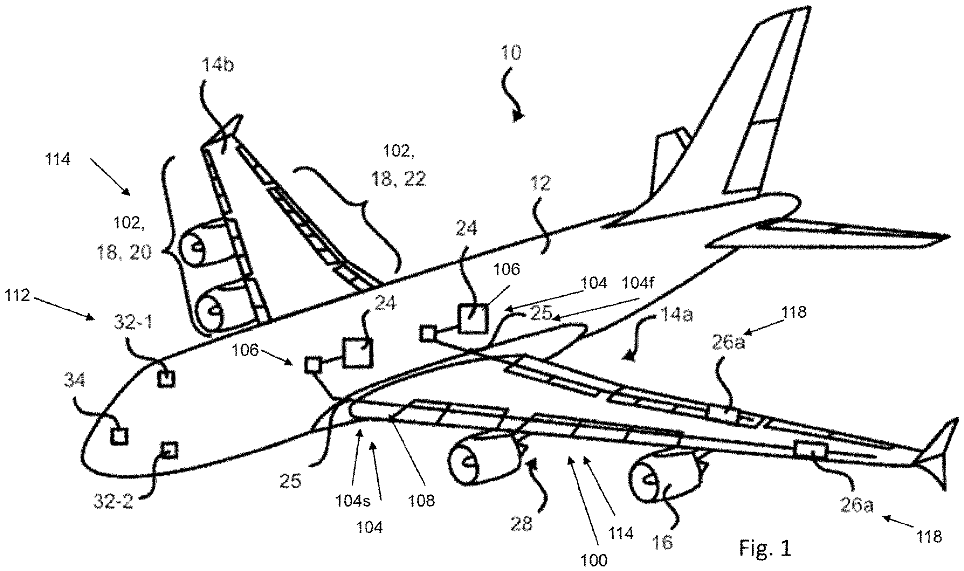

Referring to Fig. 1, an aircraft 10 has a flight control system 100 including control surfaces 102 and a flight control surface driving apparatus 104. The flight control surface driving apparatus 104 comprises a control surface drive device 106 for generating mechanical power for the movement of at least one of the control surfaces 102, a transmission device 108 for transmitting mechanical power from the control surface drive device 106 to the at least one of the control surfaces 102, at least one load sensor 110 for sensing a load imposed on the control surface drive device 106, and a control device 112 configured to receive a load sensor output signal from the at least one load sensor 110 and to control the control surface drive device 106 in response to the load sensor output signal. In the embodiment shown, the flight control system 100 includes a high lift system 114 with high-lift devices 18 as control surfaces 102. Several flight control surface driving apparatuses 104, 104s, 104f are configured to drive associated groups of such high-lift devices 18. The flight control surface driving apparatus 104 further includes a brake device 118 for braking or blocking movement of the transmission device 108.

As further shown in Fig. 1, the aircraft 10 has a fuselage 12. The aircraft 10 also has a pair of wings 14a, 14b that are attached to the fuselage 12. The aircraft 10 further comprises engines 16 that are attached to the wings 14a, 14b.

The aircraft 10 has a plurality of said high-lift devices 18, such as slats 20 and flaps 22 which are examples of the control surfaces 102. The high-lift devices 18 are driven by a power control unit or PCU 24 which is an example of the control surface drive device 106. The PCU 24 outputs torque to the transmission device 108 which includes drive shafts 25 that are connected to the high-lift devices 18 in a manner known per se. In order to arrest the high-lift devices 18 in a predetermined position, wing tip brakes (WTB) 26a, 26b (elements of the brake device 118) are arranged near the end portions of the drive shafts 25.

In more detail, the high-lift system 114 includes, as flight control surface driving apparatuses 104, a slat driving apparatus 104s for driving the slats 20 and a flap driving apparatus 104f for driving the flaps. Each of these driving apparatuses 104s, 104f has a centralized PCU 24 mounted in the fuselage. Each PCU 24 is controlled by the control device 112 which includes a first and a second slat flap computer (SFCC) 32-1, 32-2. The first and second slat flap computers 32-1, 32-2 are independent from each other and control and monitor the slat and flap driving apparatuses 104s, 104f in correspondence with the pilot's operation of an input device 34.

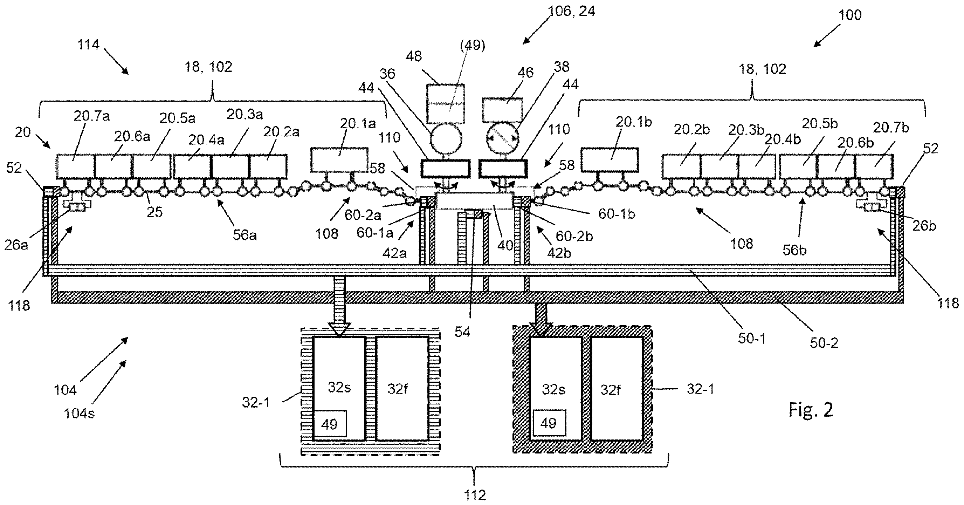

The configurations of the slat and flap driving apparatuses 104s, 104f are similar and are explained in more detail with reference to the example of the slat driving apparatus 104s depicted schematically in Fig. 2.

Referring now to Fig. 2, first the PCU 24 as an example of the control surface drive device 106 for generating mechanical power for the movement of the slats 20 is described. The PCU24 has at least two independent motors 36, 38 which are connected by an appropriate gear, for example a speed summing differential gear (DIFG) 40.

The DIFG 40 has a left-hand output shaft 42a for driving first to seventh left-hand slats 20.1a to 20.7b and a right-hand output shaft 42b for driving first to seventh right-hand slats 20.1b to 20.7b. Of course, the number of slats 20 may differ in other embodiments.

Each motor 36, 38 is provided with a Power Off Brake 44 to arrest the motor 36, 38 in the commanded position. Depending on the aircraft power supply system and the availability requirements the PCU 24 is either purely hydraulically or electrically driven or includes an electric motor 36 and a hydraulic motor 38 (hybrid PCU) as shown in the present embodiment. For the electric motor 36, a digitally controlled brushless DC motor may be used and for the hydraulic motor 38 a digitally controlled variable displacement motor may be used and may be controlled by a hydraulic valve block 46. For the electric drive embodying the electric motor 36, a Motor Control Electronic (MCE) 48 is interfacing with the SFCC 32-1, 32-2 and an aircraft electrical busbar 50-1, 50-2. The MCE 48 converts the electric power as required for the brushless DC motor. A motor control for the hydraulic and electric drive is established by a closed loop layout to maintain speed and torque command inputs. The control algorithms are implemented, e.g. by software as computer programs, in the control device 112 (e.g. in each SFCC 32-1, 32-2) which is provided with all required data to control the motors 36, 38. The SFCCs 32-1, 32-2 of the control device 112 control this operation of the flight control surface driving apparatus 104 also in response to output signals of load sensors 110 and position pick-up units 52, 54. The SFCC 32 has a slat control portion 32s controlling the operation of the slat driving apparatus 104s, and a flap control portion 32f controlling the operation of the flap driving apparatus 104f which is not shown in Fig. 2. In one embodiment, the MCE 48 comprises a closed-loop controller 49 for controlling speed and torque of the electric motor 36. According to another embodiment, the closed loop controller 49 is implemented as software within the control device 112, e.g. in any of the SFCCs 32-1, 32-2.

The transmission device 108 includes a left-hand torque shaft system 56a connected to the left-hand output shaft 42a and a right-hand torque shaft system 56b connected to the right-hand output shaft 42b. Each torque shaft system 56a, 56b comprises a series of the drive shafts 25, connected to each other for a common rotation. A left-hand WTB 26a acts on the last drive shaft 25 of the left-hand torque shaft system 56a near the wing tip of the left-hand wing 14a, and a right-hand WTB 26b acts on the last drive shaft 25 of the right-hand torque system 56b near the wing tip of the right-hand wing 14b. Further, a position pick-up unit 52 picks up the position (e.g. an absolute rotation angle position) of the corresponding last drive shaft 25.

The load in the transmission of each wing 14a, 14b is limited by electronic load limiter (ETL) functionality using the at least one load sensor 110. In the embodiment shown, where the mechanical power is transmitted via rotation, the torque in the transmission of each wing 14 is limited by electronic torque limiter functionality. The torque in the torque shaft systems 56a, 56b of the transmission device 108 is limited by electronic torque sensing units (TSU) 58 including a first torque sensor 60-1a, 60-1b and a second torque sensor 60-2a, 60-2b sensing the torque imposed on the corresponding output shaft 42a, 42b of the POB 24. For example, the TSUs 58 are integrated on the PCU outputs to the left-hand and right-hand wing 14a, 14b. The left-hand and right-hand first torque sensors 60-1a, 60-1b are connected to the first SFCC 32-1, and the left-hand and right-hand second torque sensors 60-2a, 60-2b are connected to the second SFCC 32-2.

If the TSU 58 detects that the torque in one of the PCU output shafts 42a, 42b exceeds a predetermined over torque threshold, the electrical output signal provided by the TSU 58 triggers a monitor (implemented as computer program in the control device 112) which initiates a rapid speed reversal and torque control sequence subsequently controlling the torque to a lower level. This ensures that the prescribed loads in the transmission device 108 are not exceeded even in case of a jam. Finally, the slat driving apparatus 104s is arrested by engaging the POB 44 of the corresponding motor 36, 38.

In the default High Lift operating mode the WTBs 26a, 26b are released and the PCU 24 is providing the power to operate the high-lift system 114 with the commanded speed into any gated position.

For implementing the load sensor 110, any appropriate load sensing principle is possible. For example, the TSU 58 which replaces mechanical system torque limiters of conventional flight control surface driving apparatuses comprises appropriate mechanical and electrical components to measure the PCU output torque and to translate it into an electrical output signal (e.g. by Linear Variable Transducer (LVDT)).

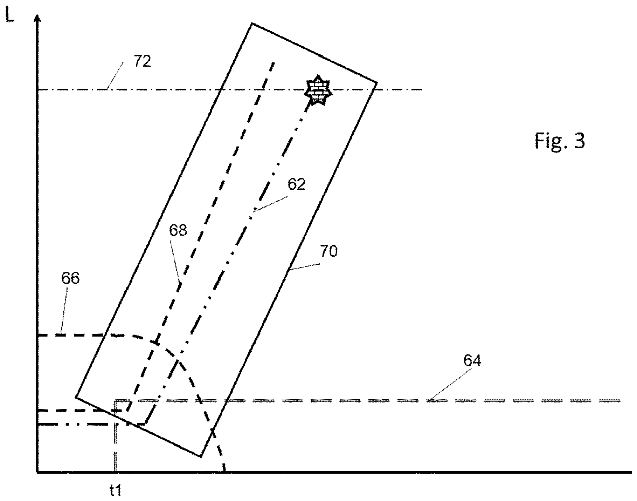

In the following a health monitoring procedure for checking proper functionality of the transmission device 108 and of the load sensors 110 is described with reference to Fig. 3. The control device 112 contains a corresponding computer program and is configured to command an automatic performance of this functionality check. The functionality check leads to early detection of wear or other possible reasons for beginning deteriorations, improves long-term reliability and helps to avoid unnecessary maintenance work.

Mechanical alterations in the TSU 58 (e.g. wear or other alterations of mechanical components which transfer a torsional deflection of the output shaft 42a, 42b into a linear motion sensed by electrical sensors) will have influence on the TSU torque value readings.

An example for a TSU condition check is explained in the following with reference to Fig. 3.

Fig. 3 shows the following signals over the time t:
- a load sensor output signal 62 of the load sensor 110 to be tested, here for example the first torque sensor 60-1a on the left-hand output shaft 42a of the POB 24.
- A brake device command signal 64 for commanding an operation of the brake device 118, here for example a WTB command signal for activating the left-hand WTB 26a.
- A drive speed signal 66 of the control surface drive device 106, here for example a speed signal indicative of the rotation speed of the output of the POB 24. This speed signal can be derived, for example, from the position pick-up unit 54 at the DIFG 40.
- A load command signal 68 commanding a load output from the control surface drive device 106, here preferably a MCE torque command signal outputted from an integral part of the closed-loop controller 49.
- a predetermined range 70 for the load sensor output signal 62 and/or the load command signal.

The functionality check of the health monitoring method comprises the following steps:
a) blocking movement of the transmission device 108 by means of the brake device 118,
b) commanding the control surface drive device 106 to apply a load on the blocked transmission device, and
c) determining whether at least one load sensor output signal 62 of the at least one load sensor 110 is within the predetermined range 70.

Referring to Fig. 3, the WTB engages at time t1. Further, the control surface drive devise 106 receives a command to drive with low speed. After t1, the drive speed signal 66 starts to drop. The closed-loop controller 49 responds by sending a load command signal 68 (MCE torque signal) which rises linearly. Further, since the transmission device 108 is blocked, the load sensor 110 outputs the load sensor output signal 62 which rises linearly. The control device 112 determines whether the load sensor output signal 62 remains in the predetermined range 70. Further, the control device 112 determines whether the load command signal 68 remains in the predetermined range 70. If any of the signals 62, 68 leaves the predetermined range, a failure message is issued. Otherwise, the test is continued until the load sensor output signal reaches the predetermined ETL over torque threshold 72 as mentioned above. According to another embodiment (not shown), the test ends when the load command signal 68 reaches a predetermined load limit, for example a threshold which corresponds to the ETL over torque threshold 72.

Fig. 3 shows for example a TSU integrity check as part of a WTB and/or POB performance test. A preferred embodiment is described in the following in more detail.

As part of the WTB / POB performance test, which is carried out regularly, the following sequence can be used to check the correct function of the TSU 58. The SFCC 32-1, 32-2 commands the electric drive of the PCU 24 with low speed against the engaged WTB 26a, 26b causing stall of the electric drive. The speed control of the PCU electric drive implemented in the SFCC 32-1, 32-2 is established by a closed speed control loop with an integral part. The output of this speed loop is the MCE torque command signal 68 which correspond to a commanded motor torque. Because of the integral part of the controller 49, the MCE torque command signal 68 steadily increases during the stall condition. As a consequence, with increasing electric motor torque, the torque at the PCU 24 output which is measured by the TSU 58 also increases. The TSU Torque reading - load sensor output signal 62 - is compared by the SFCC 32-1, 32-2 to a reference torque value (e.g. MCE torque command signal 68 from the speed loop). When the deviation of these two signals 62, 68 exceeds a defined threshold, the test is aborted and failed. As long as during motor stall both signals following within an acceptable range the motor drive command remains active until a defined threshold 72 is achieved. The test is successfully passed when a defined threshold is achieved (e.g. the ETL trip threshold). The correct function of the TSU 58 is proven when the TSU Torque reading is following the rise of the commanded motor torque signal within an acceptable range until the abort condition is achieved.

In case that the speed loop is implemented in the MCE 48 the corresponding evaluation will be performed in the MCE 48 and the results are sent to the SFCC 32-1, 32-2.

In order to reduce maintenance work and to improve long-time reliability, a health monitoring method has been described for checking a functionality of a flight control surface driving apparatus 104 using at least one load sensor 110 for sensing a load imposed on a control surface drive device 106, the method comprising at least one of the steps:
a) blocking movement of the transmission device 108 by means of a brake device 118,
b) commanding the control surface drive device 106 to apply a load on the blocked transmission device, and
c) determining whether at least one load sensor output signal 62 of the at least one load sensor 110 is within a predetermined range.

Further, a flight control surface drive apparatus 104, a flight control system 100 and an aircraft 10 comprising a control device 112 configured to automatic command conduct of such health monitoring method have been described.

While the health monitoring has been described in connection with driving flight control surfaces which can be primary and secondary flight control surfaces, the health monitoring could also be applied to other flight control surfaces of an aircraft.

### Reference signs list:

- 10: aircraft
- 12: fuselage
- 14a: left-hand wing
- 14b: right-hand wing
- 16: engine
- 18: high-lift device
- 20: slat
- 20.1a - 20.7a: left-hand slats
- 20.1b - 20.7b: right-hand slats
- 22: flap
- 24: PCU
- 25: drive shaft
- 26a: left-hand WTB
- 26b: right-hand WTB
- 32-1: first SFCC
- 32-2: second SFCC
- 32s: slat control portion
- 32f: flap control portion
- 34: input device
- 36: electric motor
- 38: hydraulic motor
- 40: DIFG
- 42a: left-hand output shaft
- 42b: right-hand output shaft
- 44: POB
- 46: hydraulic valve block
- 48: MCE
- 49: closed-loop controller
- 50-1: electric busbar
- 50-2: electric busbar
- 52: position pick-up unit (output of transmission device)
- 54: position pick-up unit (DIFG)
- 56a: left-hand torque shaft system
- 56b: right-hand torque shaft system
- 58: TSU
- 60-1a: left-hand first torque sensor (example for first load sensor)
- 60-1b: left-hand first torque sensor (example for first load sensor)
- 60-2a: left-hand second torque sensor (example for second load sensor)
- 60-2b: left-hand second torque sensor (example for second load sensor)
- 62: load sensor output signal
- 64: brake device command signal
- 66: drive speed signal (actual drive speed)
- 68: load command signal
- 70: predetermined range
- 72: over torque threshold
- 100: flight control system
- 102: control surface
- 104: flight control surface driving apparatus
- 104s: slat driving apparatus
- 104f: flap driving apparatus
- 106: control surface drive device
- 108: transmission device
- 110: load sensor
- 112: control device
- 114: high-lift system
- 118: brake device
- L: load, for example torque [Nm]
- t: time
- t1: engagement of WTB starts

## Claims

1. Health monitoring method for checking a functionality of a flight control surface driving apparatus (104) comprising a control surface drive device (106) for generating mechanical power for moving at least one control surface (102), a transmission device (108) for transmitting mechanical power from the control surface drive device (106) to the at least one control surface (102), at least one brake device (118) for braking movement of the transmission device, at least one load sensor (110) for sensing a load imposed on the control surface drive device (106), and a control device (112) configured to receive a load sensor output signal (62) from the at least one load sensor (110) and to control the control surface drive device (106) in response to the load sensor output signal (62), wherein the health monitoring method comprises automatically checking proper functionality of at least one of the at least one load sensor (110) and the transmission device (108) by
a) blocking movement of the transmission device (108) by means of the brake device (118),
b) commanding the control surface drive device (106) to apply a load on the transmission device blocked by the brake device (118), while
c) determining whether at least one load sensor output signal (62) of the at least one load sensor (110) remains within a predetermined range (70).

2. Health monitoring method according to claim 1, wherein step b) comprises at least one or several of the steps:
b1) sending a load command signal (68) to the control surface drive device (106) corresponding a commanded load to be applied;
b2) commanding the control surface drive device (106) to apply a rising load on the blocked transmission device (108);
b3) commanding a closed-loop controller (49), configured to control a speed and load of the control surface drive device (106) by a close-loop control, to drive the control surface drive device (106) with a predetermined speed and automatically generating load command signals (68) commanding rising loads by the close-loop controller (49).

3. Health monitoring method according to claim 1 or 2, wherein step c) comprises at least one or several of the steps:
c1) determining whether a difference between the commanded load and a load corresponding to the at least one load sensor output signal (62) exceeds a predetermined maximum value;
c2) setting the predetermined range (70) depending on a load command signal (68);
c3) ending the determination when the commanded load signal achieves a predetermined load limit;
c4) ending the determination when the at least one load sensor output signal (62) achieves a predetermined load limit (72) of a load limiting function of the flight control surface driving apparatus (104);
c5) determining whether a load command signal (68) generated in step b) is within a predetermined range (70).

4. Health monitoring method according to any of the preceding claims, wherein the flight control surface driving apparatus (104) to be monitored comprises at least one rotating element (42a, 42b, 25) for transmitting mechanical power to the at least one control surface (102), wherein the at least one load sensor (110) is at least one torque sensor (58, 60-1, 60-2) for determining a torque on the rotating element (42a, 42b, 25).

5. Flight control surface driving apparatus (104) comprising a control surface drive device (106) for generating mechanical power for moving at least one control surface (102),
a transmission device (108) for transmitting mechanical power from the control surface drive device (106) to the at least one control surface (102),
at least one brake device (118) for braking movement of the transmission device (108),
at least one load sensor (110) for sensing a load (L) imposed on the control surface drive device (106), and
a control device (112) configured to receive a load sensor output signal (62) from the at least one load sensor (110) and to control the control surface drive device (106) in response to the load sensor output signal (62-1, 62-2), the control device (112) being configured to automatically check proper functionality of at least one of the at least one load sensor (110) and the transmission device (108) by
a) blocking movement of the transmission device (108) by means of the brake device (118),
b) commanding the control surface drive device (106) to apply a load on the blocked transmission device (108), while
c) determining whether at least one load sensor output signal (62) of the at least one load sensor (110) remains within a predetermined range (70).

6. Flight control surface driving apparatus (104) according to claim 5, wherein the control device (112) is configured to automatically conduct the health monitoring method according to any of the claims 2 to 4.

7. Flight control surface driving apparatus (104) according to claim 5 or 6, wherein the control surface drive device (106) comprises at least one rotating output shaft (42a, 42b), and the at least one load sensor (110) comprises at least one torque sensor (60-1a, 60-2a, 60-1b, 60-2b) for sensing a torque of the rotating output shaft (42a, 42b).

8. Flight control surface driving apparatus (104) according to any of the claims 5 to 7, wherein the control surface drive device (106) includes an electric motor (36) controlled by a close-loop controller (49) with regard to speed and torque, wherein the close-loop controller (49) is configured to send a torque command signal commanding gradually rising torque when an output of the electric motor (36) is blocked, wherein the control device (112) is configured to compare the output of the at least one load sensor (110) with the torque command signal.

9. Flight control surface driving apparatus according to any of the claims 5 to 8, wherein the brake device (118) comprises left-hand and right-hand wing tip brakes (26a, 26b) acting on an output element of the transmission device (108) arranged near a wing tip.

10. Flight control system (100) for an aircraft (10), comprising at least one flight control surface (102) and at least one flight control surface driving apparatus (104) according to any of the claims 5 to 9 for driving the movement of the at least one flight control surface (102).

11. Flight control system (100) according to claim 10, further comprising a high-lift system (114) including high-lift devices (18) as the at least one control surface (102).

12. Flight control system (100) according to any of the claims 10 or 11, comprising
a second load sensor (110, 60-2a, 60-2b) for sensing the load imposed on the control surface drive device (106) and a second controller (32-1) receiving a load sensor output signal (62-2) of the second load sensor (110, 60-2a, 60-2b) and controlling the movement of the at least one control surface (102) in response to the load sensor output signal (62-2) of the second load sensor (110, 60-2a, 60-2b), wherein the control device (112) is configured to conduct the health monitoring method according to any of the claims 1 to 3 for the first load sensor (110, 60-1a, 60-1b) and for the second load sensor (110, 60-2a, 60-2b).

13. Flight control system (100) according to any of the claims 10 to 12, wherein the control device (112) is configured to compare the load sensor output signal (62-1, 62-2) of the at least one load sensor (110) with a predetermined maximum load value in a flight and ground condition and to trigger, when the load sensor output exceeds the predetermined maximum load value, a reverse movement and a subsequent load control sequence for controlling the load to achieve a lower load level.

14. Aircraft (10) comprising the flight control surface driving apparatus (104) according to any one of the claims 5 to 9 or the flight control system (100) according to any of the claims 10 to 13.

15. Computer program comprising instructions to cause the flight control system (100) of any of the claims 10 to 13 to execute the steps of the health monitoring method of any of the claims 1 to 4.

## Patentansprüche

1. Gesundheitsüberwachungsverfahren zum Prüfen einer Funktionalität einer Flugsteuerungsflächenansteuervorrichtung (104), die eine Steuerungsflächenansteuereinrichtung (106) zum Erzeugen einer mechanischen Leistung zum Bewegen mindestens einer Steuerungsfläche (102), eine Übertragungseinrichtung (108) zum Übertragen einer mechanischen Leistung von der Steuerungsflächenansteuereinrichtung (106) zur mindestens einen Steuerungsfläche (102), mindestens eine Bremseinrichtung (118) zum Bremsen einer Bewegung der Übertragungseinrichtung, mindestens einen Belastungssensor (110) zum Erfassen einer Belastung, die auf die Steuerungsflächenansteuereinrichtung (106) ausgeübt wird, und eine Steuereinrichtung (112), die konfiguriert ist, ein Belastungssensorausgangssignal (62) von dem mindestens einen Belastungssensor (110) zu empfangen und die Steuerungsflächenansteuereinrichtung (106) in Reaktion auf das Belastungssensorausgangssignal (62) zu steuern, umfasst, wobei das Gesundheitsüberwachungsverfahren ein automatisches Prüfen einer ordnungsgemäßen Funktionalität mindestens eines des mindestens einen Belastungssensors (110) und der Übertragungseinrichtung (108) durch Folgendes umfasst:
a) Blockieren der Bewegung der Übertragungseinrichtung (108) mittels der Bremseinrichtung (118) und
b) Anweisen der Steuerungsflächenansteuereinrichtung (106), eine Belastung auf die Übertragungseinrichtung, die durch die Bremseinrichtung (118) blockiert ist, aufzubringen, während eines
c) Bestimmens, ob mindestens ein Belastungssensorausgangssignal (62) des mindestens einen Belastungssensors (110) in einem vorgegebenen Bereich (70) bleibt.

2. Gesundheitsüberwachungsverfahren nach Anspruch 1, wobei Schritt b) mindestens einen oder mehrere der folgenden Schritte umfasst:
b1) Senden eines Belastungsanweisungssignals (68) zur Steuerungsflächenansteuereinrichtung (106), das einer angewiesenen Belastung, die aufgebracht werden soll, entspricht;
b2) Anweisen der Steuerungsflächenansteuereinrichtung (106), eine ansteigende Belastung auf die blockierte Übertragungseinrichtung (108) aufzubringen;
b3) Anweisen einer Steuereinheit (49) mit geschlossenem Regelkreis, die konfiguriert ist, eine Geschwindigkeit und eine Belastung der Steuerungsflächenansteuereinrichtung (106) durch eine Steuerung mit geschlossenem Regelkreis zu steuern, die Steuerungsflächenansteuereinrichtung (106) mit einer vorgegebenen Geschwindigkeit anzusteuern, und automatisches Erzeugen von Belastungsanweisungssignalen (68), die ansteigende Belastungen anweisen, durch die Steuereinheit (49) mit geschlossenem Regelkreis.

3. Gesundheitsüberwachungsverfahren nach Anspruch 1 oder 2, wobei Schritt c) mindestens einen oder mehrere der folgenden Schritte umfasst:
c1) Bestimmen, ob eine Differenz zwischen der angewiesenen Belastung und einer Belastung, die dem mindestens einen Belastungssensorausgangssignal (62) entspricht, einen vorgegebenen Höchstwert überschreitet;
c2) Einstellen des vorgegebenen Bereichs (70) abhängig von einem Belastungsanweisungssignal (68);
c3) Beenden der Bestimmung, wenn das angewiesene Belastungssignal eine vorgegebene Belastungsgrenze erreicht;
c4) Beenden der Bestimmung, wenn das mindestens eine Belastungssensorausgangssignal (62) eine vorgegebene Belastungsgrenze (72) einer Belastungsbegrenzungsfunktion der Flugsteuerungsflächenansteuervorrichtung (104) erreicht; und
c5) Bestimmen, ob ein Belastungsanweisungssignal (68), das in Schritt b) erzeugt wird, in einem vorgegebenen Bereich (70) ist.

4. Gesundheitsüberwachungsverfahren nach einem der vorhergehenden Ansprüche, wobei die Flugsteuerungsflächenansteuervorrichtung (104), die überwacht werden soll, mindestens ein Drehelement (42a, 42b, 25) zum Übertragen einer mechanischen Leistung zur mindestens einen Steuerungsfläche (102) umfasst und der mindestens eine Belastungssensor (110) mindestens ein Drehmomentsensor (58, 60-1, 60-2) zum Bestimmen eines Drehmoments am Drehelement (42a, 42b, 25) ist.

5. Flugsteuerungsflächenansteuervorrichtung (104), die Folgendes umfasst:
eine Steuerungsflächenansteuereinrichtung (106) zum Erzeugen einer mechanischen Leistung zum Bewegen mindestens einer Steuerungsfläche (102),
eine Übertragungseinrichtung (108) zum Übertragen einer mechanischen Leistung von der
Steuerungsflächenansteuereinrichtung (106) zur mindestens einen Steuerungsfläche (102),
mindestens eine Bremseinrichtung (118) zum Bremsen einer Bewegung der Übertragungseinrichtung (108),
mindestens einen Belastungssensor (110) zum Erfassen einer Belastung (L), die auf die
Steuerungsflächenansteuereinrichtung (106) ausgeübt wird, und
eine Steuereinrichtung (112), die konfiguriert ist, ein Belastungssensorausgangssignal (62) von dem mindestens einen Belastungssensor (110) zu empfangen und die Steuerungsflächenansteuereinrichtung (106) in Reaktion auf das Belastungssensorausgangssignal (62-1, 62-2) zu steuern, wobei die Steuereinrichtung (112) konfiguriert ist, eine ordnungsgemäße Funktionalität mindestens eines des mindestens einen Belastungssensors (110) und der Übertragungseinrichtung (108) durch Folgendes automatisch zu prüfen:
a) Blockieren der Bewegung der Übertragungseinrichtung (108) mittels der Bremseinrichtung (118) und
b) Anweisen der Steuerungsflächenansteuereinrichtung (106), eine Belastung auf die blockierte Übertragungseinrichtung (108) aufzubringen, während eines
c) Bestimmens, ob mindestens ein Belastungssensorausgangssignal (62) des mindestens einen Belastungssensors (110) in einem vorgegebenen Bereich (70) bleibt.

6. Flugsteuerungsflächenansteuervorrichtung (104) nach Anspruch 5, wobei die Steuereinrichtung (112) konfiguriert ist, das Gesundheitsüberwachungsverfahren nach einem der Ansprüche 2 bis 4 automatisch durchzuführen.

7. Flugsteuerungsflächenansteuervorrichtung (104) nach Anspruch 5 oder 6, wobei die Steuerungsflächenansteuereinrichtung (106) mindestens eine Drehantriebswelle (42a, 42b) umfasst und der mindestens eine Belastungssensor (110) mindestens einen Drehmomentsensor (60-1a, 60-2a, 60-1b, 60-2b) zum Erfassen eines Drehmoments der Drehantriebswelle (42a, 42b) umfasst.

8. Flugsteuerungsflächenansteuervorrichtung (104) nach einem der Ansprüche 5 bis 7, wobei die Steuerungsflächenansteuereinrichtung (106) einen Elektromotor (36) enthält, der durch eine Steuereinheit (49) mit geschlossenem Regelkreis im Hinblick auf die Geschwindigkeit und das Drehmoment gesteuert wird, die Steuereinheit (49) mit geschlossenem Regelkreis konfiguriert ist, ein Drehmomentanweisungssignal zu senden, das ein allmähliches Ansteigen eines Drehmoments anweist, wenn ein Abtrieb des Elektromotors (36) blockiert ist, und die Steuereinrichtung (112) konfiguriert ist, die Ausgabe des mindestens einen Belastungssensors (110) mit dem Drehmomentanweisungssignal zu vergleichen.

9. Flugsteuerungsflächenansteuervorrichtung nach einem der Ansprüche 5 bis 8, wobei die Bremseinrichtung (118) linke und rechte Flügelspitzenbremsen (26a, 26b) umfasst, die auf ein Ausgabeelement der Übertragungseinrichtung (108) wirken, das in der Nähe einer Flügelspitze angeordnet ist.

10. Flugsteuersystem (100) für ein Luftfahrzeug (10), das mindestens eine Flugsteuerungsfläche (102) und mindestens eine Flugsteuerungsflächenansteuervorrichtung (104) nach einem der Ansprüche 5 bis 9 zum Ansteuern der Bewegung der mindestens einen Flugsteuerungsfläche (102) umfasst.

11. Flugsteuersystem (100) nach Anspruch 10, das ferner ein Hochauftriebssystem (114) umfasst, das Hochauftriebseinrichtungen (18) als die mindestens eine Steuerungsfläche (102) enthält.

12. Flugsteuersystem (100) nach einem der Ansprüche 10 oder 11, das Folgendes umfasst:
einen zweiten Belastungssensor (110, 60-2a, 60-2b) zum Erfassen der Belastung, die auf die
Steuerungsflächenansteuereinrichtung (106) ausgeübt wird, und eine zweite Steuereinheit (32-1), die ein Belastungssensorausgangssignal (62-2) des zweiten Belastungssensors (110, 60-2a, 60-2b) empfängt und die Bewegung der mindestens einen Steuerungsfläche (102) in Reaktion auf das Belastungssensorausgangssignal (62-2) des zweiten Belastungssensors (110, 60-2a, 60-2b) steuert, wobei die Steuereinrichtung (112) konfiguriert ist, das Gesundheitsüberwachungsverfahren nach einem der Ansprüche 1 bis 3 für den ersten Belastungssensor (110, 60-1a, 60-1b) und für den zweiten Belastungssensor (110, 60-2a, 60-2b) durchzuführen.

13. Flugsteuersystem (100) nach einem der Ansprüche 10 bis 12, wobei die Steuereinrichtung (112) konfiguriert ist, das Belastungssensorausgangssignal (62-1, 62-2) des mindestens einen Belastungssensors (110) mit einem vorgegebenen Maximalbelastungswert in einem Flug- und einem Bodenzustand zu vergleichen und dann, wenn die Belastungssensorausgabe den vorgegebenen Maximalbelastungswert überschreitet, eine Rückwärtsbewegung und eine nachfolgende Belastungssteuerungssequenz zum Steuern der Belastung, um ein geringeres Belastungsniveau zu erreichen, auszulösen.

14. Luftfahrzeug (10), das die Flugsteuerungsflächenansteuervorrichtung (104) nach einem der Ansprüche 5 bis 9 oder das Flugsteuersystem (100) nach einem der Ansprüche 10 bis 13 umfasst.

15. Computerprogramm, das Befehle umfasst, um zu bewirken, dass das Flugsteuersystem (100) nach einem der Ansprüche 10 bis 13 die Schritte des Gesundheitsüberwachungsverfahrens nach einem der Ansprüche 1 bis 4 ausführt.

## Revendications

1. Procédé de surveillance de l'état de santé pour vérifier le fonctionnement d'un appareil d'entraînement de gouverne de vol (104) comprenant un dispositif d'entraînement de gouverne (106) destiné à générer de la puissance mécanique destinée à déplacer au moins une gouverne (102), un dispositif de transmission (108) destiné à transmettre la puissance mécanique du dispositif d'entraînement de gouverne (106) à l'au moins une gouverne (102), au moins un dispositif de freinage (118) pour freiner le mouvement du dispositif de transmission, au moins un capteur de charge (110) destiné à détecter une charge exercée sur le dispositif d'entraînement de gouverne (106), et un dispositif de commande (112) configuré pour recevoir un signal de sortie de capteur de charge (62) depuis l'au moins un capteur de charge (110) et pour commander le dispositif d'entraînement de gouverne (106) en réponse au signal de sortie de capteur de charge (62), le procédé de surveillance de l'état de santé comprenant la vérification automatique du bon fonctionnement de l'au moins un capteur de charge (110) et/ou du dispositif de transmission (108) par
a) blocage du mouvement du dispositif de transmission (108) au moyen du dispositif de freinage (118),
b) commande au dispositif d'entraînement de gouverne (106) d'appliquer une charge sur le dispositif de transmission bloqué par le dispositif de freinage (118), et simultanément par
c) détermination si au moins un signal de sortie de capteur de charge (62) de l'au moins un capteur de charge (110) reste dans une plage prédéterminée (70).

2. Procédé de surveillance de l'état de santé selon la revendication 1, l'étape b) comprenant au moins une ou plusieurs des étapes suivantes :
b1) envoi d'un signal de commande de charge (68) au dispositif d'entraînement de gouverne (106) correspondant à une charge commandée à appliquer ;
b2) commande au dispositif d'entraînement de gouverne (106) d'appliquer une charge croissante sur le dispositif de transmission (108) bloqué ;
b3) commande à un régulateur en boucle fermée (49), configuré pour réguler la vitesse et la charge du dispositif d'entraînement de gouverne (106) par une régulation en boucle fermée, d'entraîner le dispositif d'entraînement de gouverne (106) avec une vitesse prédéterminée, et génération automatique de signaux de commande de charge (68) commandant des charges croissantes par le régulateur en boucle fermée (49).

3. Procédé de surveillance de l'état de santé selon la revendication 1 ou 2, l'étape c) comprenant au moins une ou plusieurs des étapes suivantes :
c1) détermination si une différence entre la charge commandée et une charge correspondant à l'au moins un signal de sortie de capteur de charge (62) dépasse une valeur maximale prédéterminée ;
c2) définition de la plage prédéterminée (70) en fonction d'un signal de commande de charge (68) ;
c3) arrêt de la détermination lorsque le signal de charge commandée atteint une limite de charge prédéterminée ;
c4) arrêt de la détermination lorsque l'au moins un signal de sortie de capteur de charge (62) atteint une limite de charge prédéterminée (72) d'une fonction de limitation de charge de l'appareil d'entraînement de gouverne de vol (104) ;
c5) détermination si un signal de commande de charge (68) généré à l'étape b) s'inscrit dans une plage prédéterminée (70).

4. Procédé de surveillance de l'état de santé selon l'une quelconque des revendications précédentes, l'appareil d'entraînement de gouverne de vol (104) à surveiller comprenant au moins un élément rotatif (42a, 42b, 25) destiné à transmettre la puissance mécanique à l'au moins une gouverne (102), l'au moins un capteur de charge (110) étant au moins un capteur de couple (58, 60-1, 60-2) destiné à déterminer un couple sur l'élément rotatif (42a, 42b, 25).

5. Appareil d'entraînement de gouverne de vol (104), comprenant
un dispositif d'entraînement de gouverne (106) destiné à générer de la puissance mécanique destinée à déplacer au moins une gouverne (102),
un dispositif de transmission (108) destiné à transmettre la puissance mécanique du dispositif d'entraînement de gouverne (106) à l'au moins une gouverne (102),
au moins un dispositif de freinage (118) destiné à freiner le mouvement du dispositif de transmission (108), au moins un capteur de charge (110) destiné à détecter une charge (L) exercée sur le dispositif d'entraînement de gouverne (106), et
un dispositif de commande (112) configuré pour recevoir un signal de sortie de capteur de charge (62) depuis l'au moins un capteur de charge (110) et pour commander le dispositif d'entraînement de gouverne (106) en réponse au signal de sortie de capteur de charge (62-1, 62-2), le dispositif de commande (112) étant configuré pour vérifier automatiquement le bon fonctionnement de l'au moins un capteur de charge (110) et/ou du dispositif de transmission (108) en
a) bloquant le mouvement du dispositif de transmission (108) au moyen du dispositif de freinage (118),
b) commandant au dispositif d'entraînement de gouverne (106) d'appliquer une charge sur le dispositif de transmission (108) bloqué, et simultanément en
c) déterminant si au moins un signal de sortie de capteur de charge (62) de l'au moins un capteur de charge (110) reste dans une plage prédéterminée (70).

6. Appareil d'entraînement de gouverne de vol (104) selon la revendication 5, le dispositif de commande (112) étant configuré pour réaliser automatiquement le procédé de surveillance de l'état de santé selon l'une quelconque des revendications 2 à 4.

7. Appareil d'entraînement de gouverne de vol (104) selon la revendication 5 ou 6, le dispositif d'entraînement de gouverne (106) comprenant au moins un arbre de sortie rotatif (42a, 42b), et l'au moins un capteur de charge (110) comprenant au moins un capteur de couple (60-1a, 60-2a, 60-1b, 60-2b) destiné à détecter un couple de l'arbre de sortie rotatif (42a, 42b).

8. Appareil d'entraînement de gouverne de vol (104) selon l'une quelconque des revendications 5 à 7, le dispositif d'entraînement de gouverne (106) comportant un moteur électrique (36) régulé par un régulateur en boucle fermée (49) en termes de vitesse et de couple, le régulateur en boucle fermée (49) étant configuré pour envoyer un signal de commande de couple commandant une augmentation progressive du couple lorsqu'une sortie du moteur électrique (36) est bloquée, le dispositif de commande (112) étant configuré pour comparer la sortie de l'au moins un capteur de charge (110) au signal de commande de couple.

9. Appareil d'entraînement de gouverne de vol selon l'une quelconque des revendications 5 à 8, le dispositif de freinage (118) comprenant des freins de bout d'aile gauche et droit (26a, 26b) agissant sur un élément de sortie du dispositif de transmission (108) agencé à proximité d'un bout d'aile.

10. Système de commande de vol (100) pour un aéronef (10), comprenant au moins une gouverne de vol (102) et au moins un appareil d'entraînement de gouverne de vol (104) selon l'une quelconque des revendications 5 à 9 destiné à entraîner en mouvement l'au moins une gouverne de vol (102).

11. Système de commande de vol (100) selon la revendication 10, comprenant en outre un système hypersustentateur (114) comportant des dispositifs hypersustentateurs (18) formant l'au moins une gouverne (102) .

12. Système de commande de vol (100) selon l'une quelconque des revendications 10 ou 11, comprenant un deuxième capteur de charge (110, 60-2a, 60-2b) destiné à détecter la charge exercée sur le dispositif d'entraînement de gouverne (106) et un deuxième contrôleur (32-1) recevant un signal de sortie de capteur de charge (62-2) du deuxième capteur de charge (110, 60-2a, 60-2b) et commandant le mouvement de l'au moins une gouverne (102) en réponse au signal de sortie de capteur de charge (62-2) du deuxième capteur de charge (110, 60-2a, 60-2b), le dispositif de commande (112) étant configuré pour réaliser le procédé de surveillance de l'état de santé selon l'une quelconque des revendications 1 à 3 pour le premier capteur de charge (110, 60-1a, 60-1b) et pour le deuxième capteur de charge (110, 60-2a, 60-2b) .

13. Système de commande de vol (100) selon l'une quelconque des revendications 10 à 12, le dispositif de commande (112) étant configuré pour comparer le signal de sortie de capteur de charge (62-1, 62-2) de l'au moins un capteur de charge (110) à une valeur de charge maximale prédéterminée dans une situation de vol et au sol et pour déclencher, lorsque la sortie de capteur de charge dépasse la valeur de charge maximale prédéterminée, un mouvement inverse et une séquence de commande de charge consécutive destinée à amener la charge à un niveau de charge inférieur.

14. Aéronef (10) comprenant l'appareil d'entraînement de gouverne de vol (104) selon l'une quelconque des revendications 5 à 9 ou le système de commande de vol (100) selon l'une quelconque des revendications 10 à 13.

15. Programme informatique comprenant des instructions pour amener le système de commande de vol (100) selon l'une quelconque des revendications 10 à 13 à exécuter les étapes du procédé de surveillance de l'état de santé selon l'une quelconque des revendications 1 à 4.
